# EUROPÄISCHE PATENTANMELDUNG

(11) **EP 4 203 272 A1**
(43) Veröffentlichungstag der Anmeldung: **28.06.2023**
(21) Anmeldenummer: 22208560.7
(22) Anmeldetag: 21.11.2022
(51) Int. Cl.: H02K 7/116, H02K 11/25, B60K 1/00, F16H 57/04

(54) **E-ACHSEN-MODUL EINES ELEKTRISCH ANGETRIEBENEN FAHRZEUGS**

(30) Priorität: 21.12.2021 DE 102021214779
(71) Anmelder: Robert Bosch GmbH, 70442 Stuttgart (DE)
(72) Erfinder: Mohr, Nina, 70193 Stuttgart (DE); Wuensch, Andreas, 38100 Braunschweig (DE); Zucchini, Marco, 70839 Gerlingen (DE)

(57) **Zusammenfassung**

Die Erfindung bezieht sich auf ein E-Achsen-Modul (10) eines elektrisch angetriebenen Fahrzeugs, wobei das E-Achsen-Modul (10) eine Leistungselektronik (14) umfasst, ferner eine elektrische Maschine (12, 66) und ein Getriebe (16), die in einem gemeinsamen Gehäuse (18) aufgenommen sind. Mindestens ein NTC-Temperatursensor (28) oder eine Anordnung (70) mehrerer NTC-Temperatursensoren (28) ist entweder unmittelbar auf einer Gehäuseaußenseite (46) des Gehäuses (18) aufgenommen und über mindestens eine Kabelverbindung (62) mit einer Leiterplatte (26) der Leistungselektronik (14) verbunden oder ist auf einer Leiterplatte (26) der Leistungselektronik (14) angeordnet, die über mindestens eine, bevorzugt mehrere als thermische Verbindung (32) dienende domförmige Erhebungen (30), an das Gehäuse (18) angebunden ist. Ferner bezieht sich die Erfindung auf die Verwendung des E-Achsen-Moduls (10) in einem elektrisch angetriebenen Fahrzeug oder in einem elektrisch angetriebenen leichten Nutzfahrzeug.

## Beschreibung

### Technisches Gebiet

Die Erfindung bezieht sich auf ein E-Achsen-Modul eines elektrisch angetriebenen Fahrzeugs, wobei das E-Achsen-Modul eine Leistungselektronik umfasst, ferner eine elektrische Maschine und ein Getriebe, die in einem Gehäuse aufgenommen sind. Des Weiteren bezieht sich die Erfindung auf die Verwendung des E-Achsen-Moduls in einem elektrisch angetriebenen Fahrzeug oder in einem elektrisch angetriebenen leichten Nutzfahrzeug.

### Stand der Technik

DE 103 508 99 B3 bezieht sich auf eine Vorrichtung zur Temperaturerfassung von flüssigen oder gasförmigen Medien. Bei dieser Vorrichtung ist ein NTC-Temperatursensor in oder außerhalb einer Gehäusewand angeordnet, um die Temperatur eines Mediums im Inneren des Gehäuses zu messen. Hierdurch soll der Aufwand für Abdichtungen und Verkabelungen vermieden werden. Der NTC-Temperatursensor kann in einem Steuergehäuse eines Fahrzeuggetriebes angeordnet werden. Ein derartiges Steuergehäuse kann eine Leiterplatte aufweisen, welche den NTC-Temperatursensor aufnimmt.

DE 10 2008 054 064 B4 bezieht sich auf ein Verfahren zur Ermittlung der Öltemperatur in einer Maschine mittels eines physikalisch basierten Modells. Zur Bestimmung der Öltemperatur in einem Verbrennungsmotor wird unter anderem der Wärmeübergang vom Motoröl auf eine Gehäusewand herangezogen.

Bei elektrischen Antrieben, die beispielsweise eine elektrische Maschine und ein dieser zugeordnetes elektrisches Getriebe aufweisen, kann sich aufgrund der Erwärmung und der sich einstellenden Verluste im Getriebe das Schmiermedium, in der Regel Getriebeöl, sehr stark erwärmen. Um eine Überhitzung des Getriebeöls und somit eine vorzeitige Alterung des Getriebeöls oder die Beschädigung angrenzender Komponenten zu verhindern, wird die Getriebeöltemperatur in der Regel erfasst und überwacht. Bei Überschreiten einer kritischen Öltemperatur wird im Allgemeinen die Antriebsleistung reduziert.

Zur Erfassung der Getriebeöltemperatur kann beispielsweise ein Öltemperatursensor eingesetzt werden, der üblicherweise im Ölsumpf angeordnet ist. Dadurch kann einerseits eine sehr genaue Erfassung der Temperatur des Schmiermediums erfolgen, andererseits geht diese Lösung mit hohen Kosten durch zusätzliche Komponenten wie Sensor, Dichtung, Stecker und Kabel einher. Es ergibt sich ein höherer Dichtungsaufwand.

Alternativ besteht die Möglichkeit, die Öltemperatur über Berechnungsmodelle zu berechnen. Derartige Temperaturmodelle zeichnen sich durch geringe Kosten aus, da keine zusätzlichen Komponenten benötigt werden. Nachteilig bei diesen Temperaturmodellen ist jedoch deren Ungenauigkeit im Vergleich zur Temperaturaufnahme mittels eines Sensors. Ferner ist eine Berücksichtigung sich ändernder Verluste aufgrund von Einlaufvorgängen und sich einstellenden Verschleißerscheinungen über Lebensdauer sehr zeitaufwändig. Des Weiteren ist zu erwähnen, dass sich bei dem Einsatz derartiger Temperaturmodelle ein recht hoher Applikationsaufwand zur Kalibrierung dieser Modelle ergibt.

### Darstellung der Erfindung

Erfindungsgemäß wird ein E-Achsen-Modul eines elektrisch angetriebenen Fahrzeugs vorgeschlagen, wobei das E-Achsen-Modul eine Leistungselektronik umfasst, ferner eine elektrische Maschine und ein Getriebe, die in einem Gehäuse aufgenommen sind. Mindestens ein NTC-Temperatursensor oder eine Anordnung mehrerer NTC-Temperatursensoren ist entweder unmittelbar auf einer Gehäuseaußenseite des Gehäuses aufgenommen und über mindestens eine Kabelverbindung mit der Leiterplatte der Leistungselektronik verbunden oder auf einer Leiterplatte der Leistungselektronik angeordnet, die über mindestens eine, bevorzugt mehrere als thermische Verbindung dienende domförmige Erhebungen an das Gehäuse angebunden ist.

Durch diese Lösung gemäß den beiden Ausführungsmöglichkeiten lässt sich eine wesentlich genauere Ermittlung der Temperatur eines Schmiermediums erreichen. Ein sich einstellender Temperaturgradient ist aufgrund der robusten thermischen Anbindung sehr genau beschreibbar, wodurch sich eine sehr hohe Messgenauigkeit erzielen lässt. Ferner ist im Vergleich zu einem konventionellen NTC-Temperatursensor lediglich eine kurze Kabelverbindung erforderlich, ferner können im Vergleich zu konventionellen Öltemperatursensoren Kosten reduziert werden, da keine kostenintensive Peripherie wie lange Kabelstecker benötigt werden und zudem der Dichtungsaufwand entfällt.

In vorteilhafter Weiterbildung der erfindungsgemäß vorgeschlagenen Lösung umfasst das E-Achsen-Modul eine elektrische Maschine, die entweder als eine trockenlaufende elektrische Maschine oder als eine nasslaufende elektrische Maschine ausgeführt ist. In beiden Ausführungsvarianten von elektrischen Maschinen kann der mindestens eine NTC-Temperatursensor oder die Anordnung mehrerer NTC-Temperatursensoren im Gehäuse der Leistungselektronik untergebracht werden.

In Weiterbildung des erfindungsgemäß vorgeschlagenen E-Achsen-Moduls ist der mindestens eine NTC-Temperatursensor oder die Anordnung mehrerer NTC-Temperatursensoren in Bezug auf die Leiterplatte an positionsunabhängigen Einbaulagen beziehungsweise Einbauorten platzierbar. Dadurch kann erreicht werden, dass der mindestens eine NTC-Temperatursensor oder mehrere NTC-Temperatursensoren einer Anordnung in besonders temperatursensitiven Bereichen des Gehäuses untergebracht werden können.

In einer vorteilhaften Weiterbildung des erfindungsgemäß vorgeschlagenen E-Achsen-Moduls ist der mindestens eine NTC-Temperatursensor oder die Anordnung mehrerer NTC-Temperatursensoren dichtungsfrei im Gehäuse der Leistungselektronik aufgenommen. Dadurch lässt sich erheblicher Dichtungs-, Montage- und Verkabelungsaufwand einsparen.

In einer vorteilhaften Weiterbildung des erfindungsgemäß vorgeschlagenen E-Achsen-Moduls sind die domförmigen Erhebungen entweder ein- oder mehrteilig ausgebildet und können als Schrauben, als Clips, als Nieten oder als KlebVerbindungen oder dergleichen mehr ausgeführt werden.

Das erfindungsgemäß vorgeschlagene E-Achsen-Modul zeichnet sich ferner dadurch aus, dass der mindestens eine NTC-Temperatursensor oder die Anordnung mehrerer NTC-Temperatursensoren in der Nähe oder oberhalb einer domförmigen Erhebung positioniert ist. Die als thermische Verbindung dienenden domförmigen Erhebungen stellen eine vorteilhafte Anbindungsstelle der NTC-Temperatursensoren aufgrund der sich einstellenden Wärmeleitung dar.

In vorteilhafter Weiterbildung des E-Achsen-Moduls ist der mindestens eine NTC-Temperatursensor oder die Anordnung mehrerer NTC-Temperatursensoren auf der Leiterplattenoberseite der Leiterplatte kontaktiert. Dadurch kann ebenfalls erheblicher andernfalls erforderlicher Dichtungsaufwand eingespart werden.

In vorteilhafter Weise ist das erfindungsgemäße E-Achsen-Modul so beschaffen, dass die Leiterplatte der Leistungselektronik Bauelemente umfasst, die eingerichtet sind, über einen sich einstellenden Temperaturgradienten zwischen einer Temperatur des Schmiermediums des Getriebes und einer an dem mindestens einen NTC-Temperatursensor oder den mehreren NTC-Temperatursensoren der Anordnung gemessenen Temperatur auf eine Temperatur des Schmiermediums zurückzuschließen.

In vorteilhafter Ausgestaltung des erfindungsgemäß vorgeschlagenen E-Achsen-Moduls ist bei einer nasslaufenden elektrischen Maschine mit gemeinsamem Sumpf für diese und das Getriebe die Temperatur der nasslaufenden elektrischen Maschine über den mindestens einen NTC-Temperatursensor oder die Anordnung mehrerer NTC-Temperatursensoren bestimmbar. Dies bedeutet eine erhebliche Vereinfachung des Designs einer nasslaufenden elektrischen Maschine, insbesondere die Einsparung einer Sensorik, die ansonsten dem Stator zugeordnet ist. Dadurch lässt sich der Stator einer nasslaufenden elektrischen Maschine so ausbilden, dass in diesem ein NTC-Temperatursensor entfallen kann.

In weiterer vorteilhafter Ausgestaltung des erfindungsgemäß vorgeschlagenen E-Achsen-Moduls umfasst die Leiterplatte der Leistungselektronik Bauelemente, die eingerichtet sind, über die Anordnung mehrerer NTC-Temperatursensoren Temperaturgradienten und/oder Temperaturverläufe im Stator der nasslaufenden elektrischen Maschine zu detektieren. Dies bietet erhebliche Vorteile hinsichtlich des Designs der Leiterplatte sowie des Designs eines Temperaturerfassungssystems, insbesondere einer nasslaufenden elektrischen Maschine.

Die Erfindung bezieht sich darüber hinaus auf die Verwendung des E-Achsen-Moduls in einem elektrisch angetriebenen Fahrzeug oder in einem elektrisch angetriebenen leichten Nutzfahrzeug.

### Vorteile der Erfindung

Durch die erfindungsgemäß vorgeschlagene Lösung in beiden Alternativen kann die Genauigkeit der Ermittlung der Temperatur des Schmiermediums erheblich verbessert werden. Der sich einstellende Temperaturgradient zwischen dem Gehäuse beziehungsweise der Gehäuseaußenseite und dem aufgewirbelten im Hohlraum des Gehäuses zirkulierenden Schmiermedium ist aufgrund der robusten thermischen Anbindung sehr genau beschreibbar, wodurch sich eine hohe Genauigkeit erzielen lässt. Die erzielbare Genauigkeit entspricht im Wesentlichen der Genauigkeit, die beispielsweise mit einem in einen Ölsumpf eintauchenden NTC-Temperatursensor gemäß dem Stand der Technik erzielbar wäre. Durch die erfindungsgemäß vorgeschlagene Lösung lässt sich eine erhebliche Kostenreduzierung erreichen. Da im Vergleich zu einem konventionellen Öltemperatursensor lediglich der Sensor benötigt wird und maximal ein kurzes Kabel zur Leiterplatte erforderlich ist, um eine Kabelverbindung herzustellen, können im Vergleich zu einem konventionell verwendeten Öltemperatursensor die Kosten erheblich reduziert. Eine kostenintensive Peripherie, beispielsweise in Gestalt längerer Kabel, Steckergeometrien und insbesondere Abdichtungselemente, wird nicht benötigt. Wird der mindestens eine NTC-Temperatursensor in vorteilhafter Weise direkt auf der Leiterplatte kontaktiert, kann auch die ansonsten erforderliche Kabelverbindung entfallen.

Des Weiteren kann durch die erfindungsgemäß vorgeschlagene Lösung eine nicht unerhebliche Gewichtsreduzierung erreicht werden, da Elemente wie beispielsweise Kabel, Stecker, Dichtungen sowie Dichtungskomponenten entfallen können. Schließlich lässt sich durch die erfindungsgemäß vorgeschlagene Lösung eine kompakte Bauform an einem E-Achsen-Modul verwirklichen. Nicht zuletzt wird darauf verwiesen, dass eine robuste Temperaturerfassung über die Lebensdauer des E-Achsen-Moduls gegeben ist. Da die Ermittlung der Temperatur des Schmiermediums auf einer direkten Messung basiert, können auch Schwankungen in der Temperatur des Schmiermediums aufgrund schwankender Verluste, zum Beispiel durch erhöhten Verschleiß, berücksichtigt werden. Dies wäre bei einem Modell, welches die Temperatur modelliert, nur mit erheblichem Aufwand möglich.

Des Weiteren kann schlussendlich durch die erfindungsgemäß vorgeschlagene Lösung der Kalibrierungsaufwand erheblich reduziert werden. Aufgrund der thermisch robusten und analytisch beschreibbaren Verbindung in Gestalt der domförmigen Erhebungen zwischen der Gehäuseaußenseite und der Leiterplatte, d. h. zwischen der Messposition am Sensor und der Öltemperatur, kann ein einfaches analytisches Modell zur Öltemperaturerfassung verwendet werden, welches im Vergleich zu konventionellen Modellen mit deutlich reduziertem Aufwand kalibriert werden kann.

### Kurze Beschreibung der Zeichnungen

Anhand der Zeichnungen wird die Erfindung nachstehend eingehender beschrieben.

Es zeigen:
- Figur 1: eine perspektivische Darstellung eines E-Achsen-Moduls mit elektrischer Maschine, Getriebe und Leistungselektronik,
- Figur 2: eine schematische Querschnittsdarstellung eines E-Achsen-Moduls mit einer als trockenlaufenden elektrischen Maschine ausgebildeten elektrischen Maschine,
- Figur 3: einen Schnitt durch eine trockenlaufende elektrische Maschine mit einer Leiterplatte, die durch domförmige Erhebungen mit dem Gehäuse in Verbindung steht,
- Figur 4: eine Ausführungsvariante des E-Achsen-Moduls mit einem Sensor, der unmittelbar eine Gehäuseaußenseite des Gehäuses eines Gehäuses kontaktiert,
- Figur 5: einen Querschnitt durch ein E-Achsen-Modul mit einer nasslaufenden elektrischen Maschine und einem gemeinsamen Ölsumpf mit einer Leiterplatte, die auf domförmigen Erhebungen angeordnet ist,
- Figur 6: ein E-Achsen-Modul mit einer nasslaufenden elektrischen Maschine und einem NTC-Temperatursensor, der die Gehäuseaußenseite des Gehäuses kontaktiert,
- Figur 7: ein E-Achsen-Modul mit einer nasslaufenden elektrischen Maschine und einer Leiterplatte, die über mehrere domförmige Erhebungen mit dem Gehäuse thermisch gekoppelt ist und
- Figur 8: eine Ausführungsvariante des E-Achsen-Moduls mit einer Anordnung von NTC-Temperatursensoren auf der Außenseite des Gehäuses, die über Kabelverbindungen mit der auf domförmigen Erhebungen angeordneten Leiterplatte elektrisch kontaktiert sind.

### Ausführungsvarianten der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

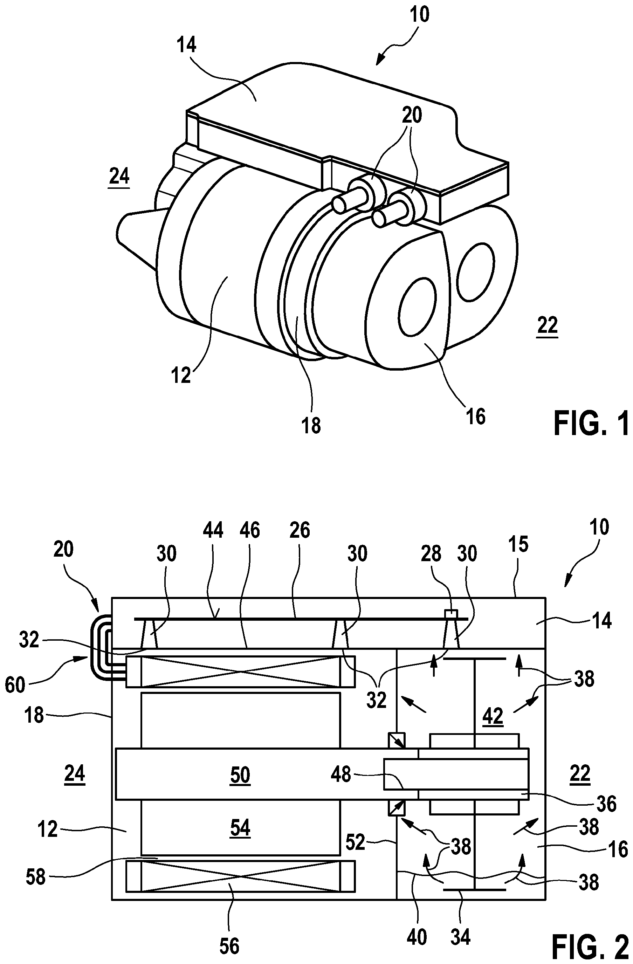

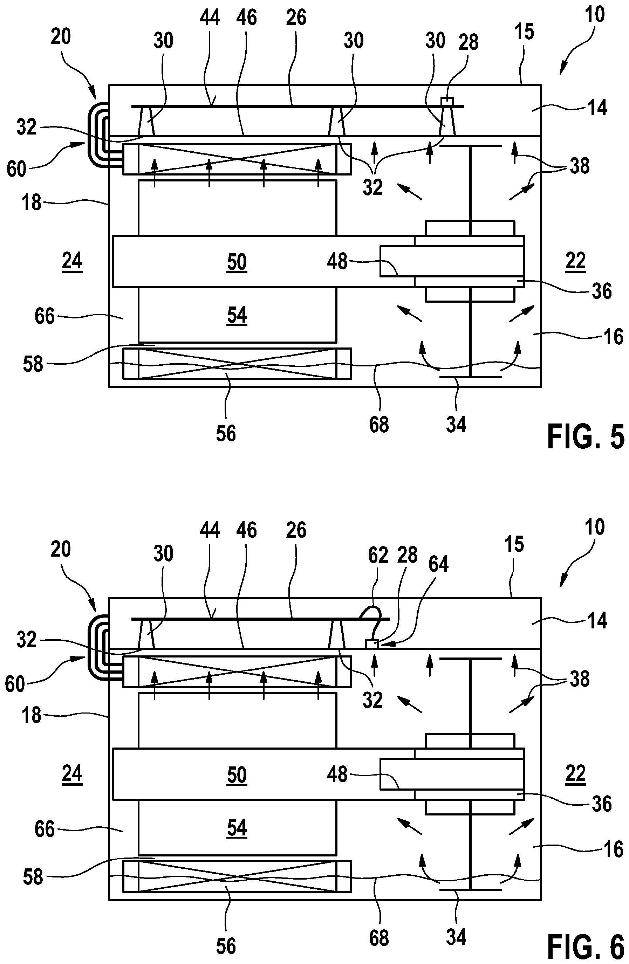

Figur 1 zeigt in schematischer Weise eine perspektivische Ansicht eines E-Achsen-Moduls 10. Dieses umfasst eine elektrische Maschine, die beispielsweise als eine trockenlaufende elektrische Maschine 12 ausgeführt sein kann. Alternativ dazu kann die elektrische Maschine auch als eine nasslaufende elektrische Maschine 66 ausgebildet sein, wie sie in den Figuren 5 bis 8 in schematischer Weise dargestellt ist. Das E-Achsen-Modul 10 umfasst eine Leistungselektronik 14, die in einem Gehäuse 15 aufgenommen ist. Des Weiteren umfasst das E-Achsen-Modul 10 ein Getriebe 16 und ein Gehäuse 18, in dem sowohl das Getriebe 16 als auch die elektrische Maschine, in diesem Falle eine trockenlaufende elektrische Maschine 12, aufgenommen ist. An dem Gehäuse 15 der Leistungselektronik 14 befinden sich elektrische Anschlüsse 20; eine Getriebeseite des E-Achsen-Moduls 10 ist mit Bezugszeichen 22 identifiziert, während eine E-Maschinenseite des E-Achsen-Moduls 10 durch Bezugszeichen 24 identifiziert ist.

Figur 2 zeigt einen Schnitt durch das erfindungsgemäß vorgeschlagene E-Achsen-Modul 10. In der in Figur 2 dargestellten Schnittdarstellung ist die elektrische Maschine des E-Achsen-Moduls 10 als trockenlaufende elektrische Maschine 12 ausgebildet. Wie der Darstellung gemäß Figur 2 entnehmbar ist, umfasst die Leistungselektronik 14, aufgenommen in dem Gehäuse 15, eine Leiterplatte 26. Die Leiterplatte 26 ist im Wesentlichen in horizontaler Einbaulage innerhalb des Gehäuses 15 orientiert. Auf einer Leiterplattenoberseite 44 ist ein NTC-Temperatursensor 28 kontaktiert. Anstelle des in Figur 2 dargestellten einen NTC-Temperatursensors 28 können auch mehrere NTC-Temperatursensoren 28 auf der Leiterplattenoberseite 44 angeordnet und kontaktiert sein.

Aus der Schnittdarstellung gemäß Figur 2 geht hervor, dass die Leiterplatte 26 der Leistungselektronik 14 auf eine Anzahl von domförmigen Erhebungen 30 aufgenommen ist. Die domförmigen Erhebungen 30, die die Leiterplatte 26 abstützen, stellen thermische Verbindungen 32 zum Gehäuse 18 dar, welches die trockenlaufende elektrische Maschine 12 und das Getriebe 16 aufnimmt.

Die domförmigen Erhebungen 30 können ein- oder mehrteilig ausgeführt sein; sie können als Schrauben, Nieten, Clips oder Klebverbindungen ausgeführt sein. Auch andere Ausführungsmöglichkeiten können herangezogen werden.

Das Getriebe 16 umfasst ein in schematischer Weise angedeutetes Zahnrad 34, welches auf einer Getriebewelle 36 angeordnet ist. Das Zahnrad 34 taucht in einen Sumpf 40 ein, der durch ein Schmiermedium gebildet ist, welches im Getrieberaum 42 bevorratet ist. Bei der Rotation des Zahnrads 34 erfolgt eine Verteilung 38 des Schmiermediums - wie in Figur 2 durch die Pfeile angedeutet. Bei der Verwirbelung des Schmiermediums im Getrieberaum 42 gerät das Schmiermedium in Kontakt mit den Gehäusewänden, die den Getrieberaum 42 begrenzen.

Für die trockenlaufende elektrische Maschine 12 ist charakteristisch, dass das Getriebe 16 beziehungsweise der Getrieberaum 42 mittels eines Radialwellendichtrings 52 von der trockenlaufenden elektrischen Maschine 12 getrennt ist. Der Radialwellendichtring 52 ist stationär an der Innenseite des Getriebes 16 aufgenommen, während eine Rotorwelle 50, an der sich ein Rotor 54 der trockenlaufenden elektrischen Maschine 12 befindet, relativ zum Radialwellendichtring 52 rotiert. Mittels des Radialwellendichtrings 52 wird verhindert, dass durch die Verteilung 38 des Schmiermediums im Getrieberaums 42 des Getriebes 16 Schmiermedium in den Teil des Gehäuses 18 gelangt, in dem die trockenlaufende elektrische Maschine 12 untergebracht ist.

Die Getriebewelle 36 und die Rotorwelle 50 sind beispielsweise durch eine Steckverbindung 48 miteinander verbunden. Das Gehäuse 18 weist eine Gehäuseaußenseite 46 auf, auf welcher sich die als thermische Verbindung 32 dienenden domförmigen Erhebungen 30 zur Abstützung der Leiterplatte 26 befinden.

Der Rotor 54, aufgenommen auf der Rotorwelle 50 der trockenlaufenden elektrischen Maschine 12, rotiert relativ zum gehäusefest angeordneten Stator 56. Zwischen dem Rotor 54 und dem Stator 56 ist ein Luftspalt 58 ausgebildet. Zwischen dem Stator 56, der stationär an der Innenseite des Gehäuses 18 angeordnet ist, und der Leistungselektronik 14 verläuft eine elektrische Kontaktierung 60, die auf der E-Maschinenseite 24 das Gehäuse 18 des E-Achsen-Moduls 10 verlässt und oberhalb des Gehäuses 18 in das Gehäuse 15 der Leistungselektronik 14 übergeht.

Durch die domförmigen Erhebungen 30, die die Leiterplatte 26 mit dem mindestens einen NTC-Temperatursensor 28 aufnehmen, besteht eine thermisch leitende Verbindung zwischen der Gehäuseaußenseite 46 und der Leiterplatte 26, an deren Leiterplattenoberseite 44 sich der mindestens eine NTC-Temperatursensor 28 befindet. Durch die Anbindung der Leiterplatte 26 der Leistungselektronik 14 über die domförmigen Erhebungen 30 ergibt sich eine thermisch robuste und analytisch beschreibbare Verbindung beziehungsweise Kopplung zwischen dem Getriebe 16 und dem mindestens einen NTC-Temperatursensor 28. Wird im Getriebe 16 beispielsweise durch das Zahnrad 34 Schmiermedium aus dem Sumpf 40 in den Getrieberaum 42 geschleudert und es kommt zu einer Verteilung 38 des Schmiermediums im Getrieberaum 42, wird somit auch das Gehäuse 18 erwärmt und somit auch die Gehäuseaußenseite 46. Diese Temperaturerhöhung kann über den mindestens einen NTC-Temperatursensor 28 detektiert werden. Über den sich einstellenden Temperaturgradienten zwischen der Schmiermediumtemperatur und der gemessenen Temperatur an dem mindestens einen NTC-Temperatursensor 28 kann auf die Öltemperatur zurückgeschlossen werden. Vorteilhaft für die Genauigkeit der Temperaturermittlung ist die entsprechende Positionierung des mindestens einen NTC-Temperatursensors 28 in der Nähe einer domförmigen Erhebung 30 beziehungsweise direkt auf der Spitze einer domförmigen Erhebung 30.

Durch die Positionierung des mindestens einen NTC-Temperatursensors 28 direkt auf der Leiterplattenoberseite 44 der Leiterplatte 26 wird kein zusätzliches Kabel oder kein zusätzlicher Stecker benötigt. Die elektrische Kontaktierung 60 des mindestens einen NTC-Temperatursensors 28 erfolgt direkt auf der Leiterplatte 26 der Leistungselektronik 14. Da sich der mindestens eine NTC-Temperatursensor 28 innerhalb des Gehäuses 15 der Leistungselektronik 14 befindet, ist dieser nicht separat abzudichten. Zudem ist kein zusätzliches Dichtungselement oder ein zusätzliches Kabel erforderlich, wodurch die Zusatzkosten geringgehalten werden und ein andernfalls erforderlicher Abdichtungsaufwand eingespart werden kann.

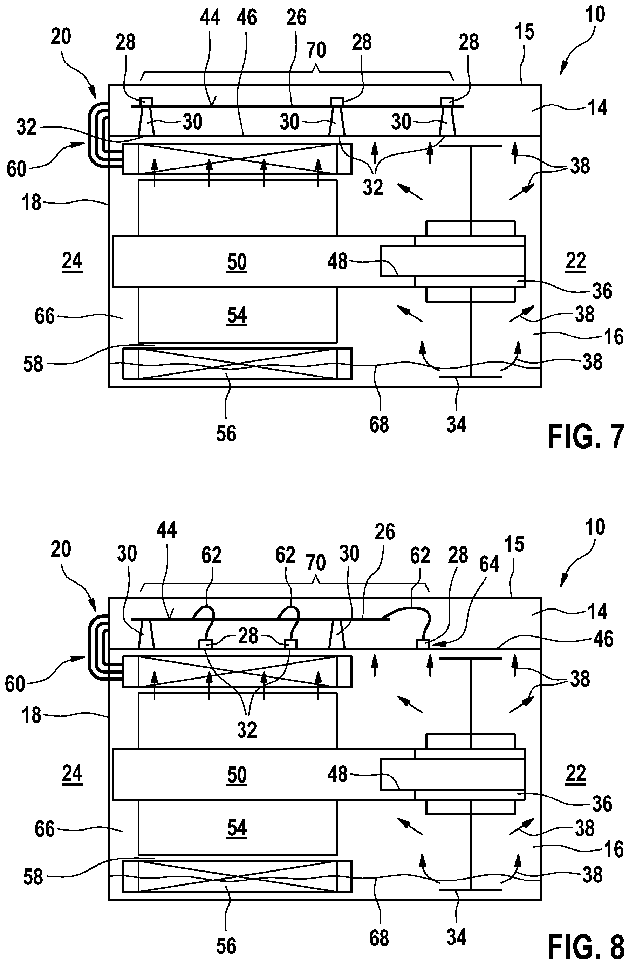

Alternativ zu dem in Figur 1 dargestellten einen NTC-Temperatursensor 28, der auf der Leiterplattenoberseite 44 aufgenommen ist, kann auch eine Anordnung 70 mehrerer NTC-Temperatursensoren 28 (vgl. Darstellung gemäß Figuren 7 und 8) auf der Leiterplattenoberseite 44 oder auch auf der Gehäuseaußenseite 46 des Gehäuses 18 des E-Achsen-Moduls 10 angeordnet werden.

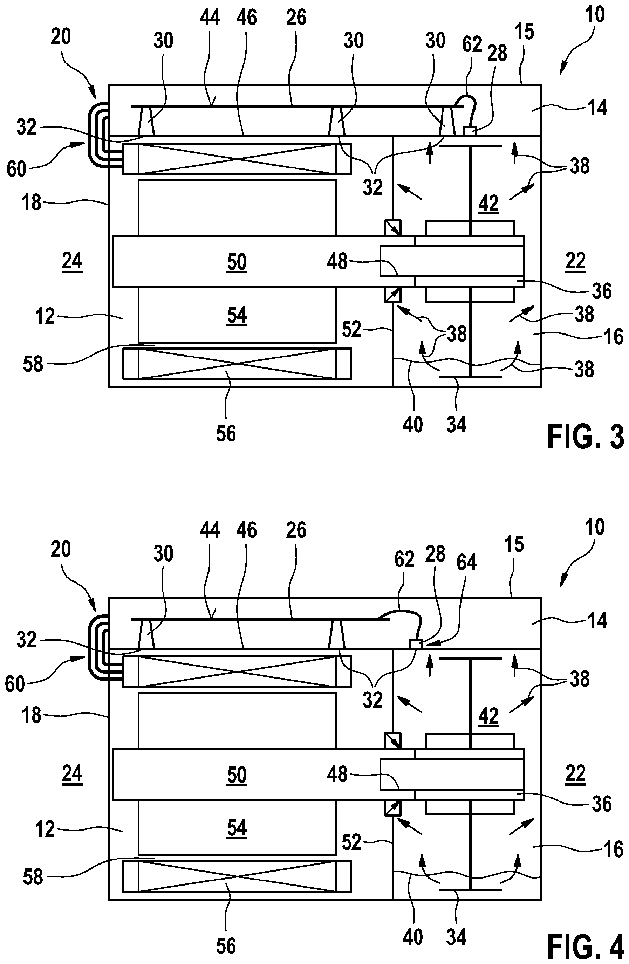

Figur 3 zeigt eine Ausführungsvariante des erfindungsgemäß vorgeschlagenen E-Achsen-Moduls 10. Die wesentlichen Komponenten, die im Zusammenhang mit der Ausführungsvariante des E-Achsen-Moduls 10 gemäß Figur 2 beschrieben worden sind, gelten auch für das Ausführungsbeispiel des erfindungsgemäß vorgeschlagenen E-Achsen-Moduls 10 gemäß der Darstellung nach Figur 3. Im Unterschied zur Ausführungsvariante des E-Achsen-Moduls 10 gemäß Figur 2 ist bei dem E-Achsen-Modul 10 gemäß der Darstellung in Figur 3 die Leiterplatte 26 in einer größeren Länge ausgeführt. Die Leiterplatte 26 ist analog zur Darstellung gemäß Figur 2 auf mehreren voneinander beabstandeten domförmigen Erhebungen 30 aufgenommen. Im Unterschied zur Ausführungsvariante gemäß Figur 3 ist jedoch der mindestens eine NTC-Temperatursensor 28 unmittelbar auf der Gehäuseaußenseite 46 des Gehäuses 18 kontaktiert. Der mindestens eine NTC-Temperatursensor 28 ist in der Ausführungsvariante des E-Achsen-Moduls 10 gemäß der Darstellung in Figur 3 über eine Kabelverbindung 62 mit den hier nicht näher dargestellten Bauelementen der Leiterplatte 26 innerhalb des Gehäuses 15 der Leistungselektronik 14 verbunden. Beim Ausführungsbeispiel des E-Achsen-Moduls 10 gemäß der Darstellung in Figur 3 ist die elektrische Maschine ebenfalls als trockenlaufende elektrische Maschine 12 ausgebildet und über den stationär angeordneten Radialwellendichtring 52 vom Getrieberaum 42, in dem es zu einer Verteilung 38 von Schmiermedium durch aufgewirbeltes Schmiermedium aus dem Sumpf 40 bei Rotation des Zahnrads 34 kommt, getrennt.

Figur 4 zeigt einen Schnitt durch eine weitere Ausführungsvariante des erfindungsgemäß vorgeschlagenen E-Achsen-Moduls 10. Gemäß der Ausführungsvariante in Figur 4 ist eine positionsunabhängige Einbaulage 64 des mindestens einen NTC-Temperatursensors 28 gegeben. In der Ausführungsvariante gemäß Figur 4 des E-Achsen-Moduls 10 ist die Leiterplatte 26 verkürzt dargestellt; der mindestens eine auf der Gehäuseaußenseite 46 kontaktierte NTC-Temperatursensor 28 ist ebenfalls über die Kabelverbindung 62 analog zur Darstellung gemäß Figur 3 mit den hier nicht näher dargestellten Komponenten auf der Leiterplattenoberseite 44 kontaktiert. Die positionsunabhängige Einbaulage 64 erlaubt es, eine direktere Verbindung zwischen der Temperatur des Schmiermediums und dem mindestens einen NTC-Temperatursensor 28 zu erzielen, wodurch die Genauigkeit erhöht wird. Die positionsunabhängige Einbaulage 64 des mindestens einen NTC-Temperatursensors 28 in Bezug auf die Leiterplatte 26 ermöglicht es, den mindestens einen NTC-Temperatursensor 28 an der Stelle des Gehäuses 18 zu positionieren, an der die robusteste thermische Verbindung zwischen dem zirkulierenden und im Getrieberaum 42 verteilten Schmiermedium erzielt werden kann.

In den Darstellungen der Figuren 5, 6, 7 und 8 wird ein erfindungsgemäßes E-Achsen-Modul 10 beschrieben, bei dem die elektrische Maschine als nasslaufende elektrische Maschine 66 ausgeführt ist. Dies bedeutet, dass der in den Ausführungsvarianten gemäß den Figuren 2, 3 und 4 vorhandene Radialwellendichtring 52 entfällt. Dadurch ist die Trennung zwischen dem Getrieberaum 42 und der nasslaufenden elektrischen Maschine 66 aufgehoben; vielmehr besteht nunmehr ein gemeinsamer Sumpf 68 zwischen dem Getriebe 16 und der nasslaufenden elektrischen Maschine 66.

In der Ausführungsvariante gemäß Figur 5 ist das E-Achsen-Modul 10 derart beschaffen, dass sich der mindestens eine NTC-Temperatursensor 28 auf der Leiterplattenoberseite 44 der Leiterplatte 26 befindet. Diese ist mit der Gehäuseaußenseite 46 über eine Anzahl von domförmigen Erhebungen 30, die als thermische Verbindung 32 dienen, verbunden. In der Ausführungsvariante gemäß Figur 6 ist das E-Achsen-Modul 10 derart aufgebaut, dass in dieser Ausführungsvariante der mindestens eine NTC-Temperatursensor 28 direkt der Gehäuseaußenseite 46, vgl. Darstellung gemäß Figur 3, zugeordnet ist. In der Darstellung gemäß Figur 6 kontaktiert der mindestens eine NTC-Temperatursensor 28 die Gehäuseaußenseite 46 unmittelbar. Entsprechend der Länge der Kabelverbindung 62 zwischen dem mindestens einen NTC-Temperatursensor 28 und den Bauelementen, die sich auf der Leiterplattenoberseite 44 der Leiterplatte 26 befinden, kann die Einbaulage des mindestens einen NTC-Temperatursensors 28 als positionsunabhängige Einbaulage 64 variiert werden, wodurch sich die weiter oben stehend bereits erwähnten Vorteile erreichen lassen.

In der in den Figuren 5 und 6 beschriebenen Ausführungsvariante des erfindungsgemäßen E-Achsen-Moduls 10 mit einer nasslaufenden elektrischen Maschine 66 kann über die ermittelte Temperatur des Schmiermediums auch auf die Temperatur der nasslaufenden elektrischen Maschine 66 zurückgeschlossen werden. Somit kann der üblicherweise an nasslaufenden elektrischen Maschinen 66 genutzte NTC-Temperatursensor 28 im Stator 56 eingespart werden, welcher in der Regel eine abgedichtete Durchführung eines Kabels erfordert. Diese Komponentensubstitution führt zu einer signifikanten Kostenreduzierung, da der nicht unerhebliche Abdichtungsaufwand reduziert werden kann.

In den Ausführungsvarianten des erfindungsgemäß vorgeschlagenen E-Achsen-Moduls 10 gemäß den Figuren 7 und 8 kommt anstelle eines NTC-Temperatursensors 28 eine Anordnung 70 mehrerer NTC-Temperatursensoren 28 zum Einsatz. In der Ausführungsvariante gemäß Figur 7 befindet sich die Anordnung 70 mehrerer NTC-Temperatursensoren 28 voneinander beabstandet auf der Leiterplattenoberseite 44 der Leiterplatte 26. Die Leiterplatte 26 ist analog zu den Darstellungen gemäß den Figuren 2 bis 6 über domförmige Erhebungen 30, die als thermische Verbindung 32 dienen, mit der Gehäuseaußenseite 46 des Gehäuses 18 thermisch leitend verbunden. In der Darstellung gemäß Figur 8 ist ebenfalls ein Querschnitt durch das erfindungsgemäß vorgeschlagene E-Achsen-Modul 10 dargestellt, welches eine nasslaufende elektrische Maschine 66 aufweist. Im Unterschied zur Darstellung gemäß Figur 7 ist hier die Anordnung 70 mehrerer NTC-Temperatursensoren 28 unmittelbar auf der Gehäuseaußenseite 46 des Gehäuses 18 des E-Achsen-Moduls 10 kontaktiert. Durch die jeweils zwischen den einzelnen NTC-Temperatursensoren 28 der Anordnung 70 verlaufenden Kabelverbindungen 62 können beispielsweise positionsunabhängige Einbaulagen 64 realisiert werden, sodass ein NTC-Temperatursensor 28 an der Stelle des Gehäuses 18 positioniert werden kann, an der die robusteste thermische Verbindung zwischen dem Schmiermedium und dem Gehäuse 18 jeweils erzielt werden kann.

Durch die in Figur 8 dargestellte Ausführungsvariante können auch Rückschlüsse auf die Temperaturverteilung beziehungsweise das Temperaturfeld getroffen werden. Dies hat insbesondere Vorteile dahingehend, dass bei einer mit Schmiermedium gefüllten nasslaufenden elektrischen Maschine 66, wie sie in den Ausführungsvarianten gemäß den Darstellungen in den Figuren 7 und 8 dargestellt ist, auch Temperaturgradienten beziehungsweise Temperaturverteilungen im Stator 56 detektiert werden können. Dadurch kann in vorteilhafter Weise die nasslaufende elektrische Maschine 66 näher an der Leistungsgrenze betrieben werden und damit auch besser ausgenutzt werden.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. E-Achsen-Modul (10) eines elektrisch angetriebenen Fahrzeugs, wobei das E-Achsen-Modul (10) eine Leistungselektronik (14) umfasst, ferner eine elektrische Maschine (12, 66) und ein Getriebe (16) in einem Gehäuse (18) des E-Achsen-Moduls (10) aufgenommen sind, **dadurch gekennzeichnet, dass** mindestens ein NTC-Temperatursensor (28) oder eine Anordnung (70) mehrerer NTC-Temperatursensoren (28) entweder unmittelbar auf einer Gehäuseaußenseite (46) des Gehäuses (18) aufgenommen ist und über mindestens eine Kabelverbindung (62) mit einer Leiterplatte (26) der Leistungselektronik (14) verbunden ist, oder auf einer Leiterplatte (26) der Leistungselektronik (14) angeordnet ist, die über mindestens eine, bevorzugt mehrere als thermische Verbindung (32) dienende domförmige Erhebungen (30) an das Gehäuse (18) angebunden ist.

2. E-Achsen-Modul (10) gemäß Anspruch 1, **dadurch gekennzeichnet, dass** die elektrische Maschine entweder als eine trockenlaufende elektrische Maschine (12) oder als eine nasslaufende elektrische Maschine (66) ausgeführt ist.

3. E-Achsen-Modul (10) gemäß den Ansprüchen 1 bis 2, **dadurch gekennzeichnet, dass** der mindestens eine NTC-Temperatursensor (28) eine in Bezug auf die Leiterplatte (26) positionsunabhängige Einbaulage (64) aufweist.

4. E-Achsen-Modul (10) gemäß den Ansprüchen 1 bis 3, **dadurch gekennzeichnet, dass** der mindestens eine NTC-Temperatursensor (28) oder die Anordnung (70) mehrerer NTC-Temperatursensoren (28) dichtungsfrei im Gehäuse (15) der Leistungselektronik (14) aufgenommen ist.

5. E-Achsen-Modul (10) gemäß den Ansprüchen 1 bis 4, **dadurch gekennzeichnet, dass** die domförmigen Erhebungen (30) ein- oder mehrteilig als Schrauben, als Clips, als Nieten oder als Klebverbindungen ausgeführt sind.

6. E-Achsen-Modul (10) gemäß den Ansprüchen 1 bis 5, **dadurch gekennzeichnet, dass** der mindestens eine NTC-Temperatursensor (28) oder die NTC-Temperatursensoren (28) der Anordnung (70) in der Nähe oder oberhalb einer domförmigen Erhebung (30) platziert sind.

7. E-Achsen-Modul (10) gemäß den Ansprüchen 1 bis 6, **dadurch gekennzeichnet, dass** der mindestens eine NTC-Temperatursensor (28) oder die Anordnung (70) mehrerer NTC-Temperatursensoren (28) unmittelbar auf einer Leiterplattenoberseite (44) der Leiterplatte (26) kontaktiert ist.

8. E-Achsen-Modul (10) gemäß den Ansprüchen 1 bis 7, **dadurch gekennzeichnet, dass** die Leiterplatte (26) der Leistungselektronik (14) Bauelemente umfasst, die eingerichtet sind, über einen sich einstellenden Temperaturgradienten zwischen einer Temperatur des Schmiermediums des Getriebes (16) und einer an dem mindestens einen NTC-Temperatursensor (28) oder den NTC-Temperatursensoren (28) der Anordnung (70) gemessenen Temperatur auf die Temperatur des Schmiermediums zurückzuschließen.

9. E-Achsen-Modul (10) gemäß den Ansprüchen 1 bis 8, **dadurch gekennzeichnet, dass** bei einer nasslaufenden elektrischen Maschine (66) mit gemeinsamem Sumpf (68) für diese und das Getriebe (16) die Temperatur der nasslaufenden elektrischen Maschine (66) über den mindestens einen NTC-Temperatursensor (28) oder die Anordnung (70) mehrerer NTC-Temperatursensoren (28) bestimmbar ist.

10. E-Achsen-Modul (10) gemäß Anspruch 9, **dadurch gekennzeichnet, dass** die nasslaufende elektrische Maschine (66) einen Stator (56) umfasst, welcher NTC-Temperatursensor-frei ausgebildet ist.

11. E-Achsen-Modul (10) gemäß den Ansprüchen 1 bis 10, **dadurch gekennzeichnet, dass** die Leiterplatte (26) der Leistungselektronik (14) Bauelemente umfasst, die eingerichtet sind, über die Anordnung (70) mehrerer NTC-Temperatursensoren (28) Temperaturgradienten und/oder Temperaturverläufe im Stator (56) der nasslaufenden elektrischen Maschine (66) zu detektieren.

12. Verwendung des E-Achsen-Moduls (10) gemäß einem der Ansprüche 1 bis 11 in einem elektrisch angetriebenen Fahrzeug oder in einem elektrisch angetriebenen leichten Nutzfahrzeug.
